# EUROPÄISCHE PATENTSCHRIFT

(11) **EP 1 800 793 B1**
(45) Veröffentlichungstag und Bekanntmachung des Hinweises auf die Patenterteilung: **12.08.2009**
(21) Anmeldenummer: 06090212.9
(22) Anmeldetag: 30.11.2006
(51) Int. Cl.: B23P 15/02, F01D 5/12, B25B 5/14

(54) **Fertigbearbeitung von aus einem spröden Werkstoff gegossenen Gasturbinenschaufeln**
Finishing of gas turbine blades cast from a brittle material
Finition d'aubes de turbine à gaz coulées dans une matière cassante

(30) Priorität: 24.12.2005 DE 102005062303
(43) Veröffentlichungstag der Anmeldung: 27.06.2007
(73) Patentinhaber: Rolls-Royce Deutschland Ltd & Co KG, 15827 Blankenfelde-Mahlow (DE)
(72) Erfinder: Mielke, Rainer, 61440 Oberursel (DE)
(74) Vertreter: Wablat, Wolfgang

(56) Entgegenhaltungen:
- EP-A- 1 543 918
- DE-A1- 4 339 069
- US-A- 5 869 194
- US-A1- 2002 174 968

## Beschreibung

Die Erfindung betrifft ein Verfahren zur Fertigbearbeitung einer Schaufelfußstruktur von aus einem spröden Werkstoff wie Titanaluminid gegossenen Schaufeln für ein Gasturbinentriebwerk und eine Anordnung zur Durchführung dieses Verfahrens.

Feingussschaufeln aus Titanaluminid zeichnen sich durch ein geringes Gewicht und eine ausreichend hohe Temperaturfestigkeit aus und werden daher bei Triebwerken unter dem Aspekt einer möglichst großen Gewichtseinsparung eingesetzt. Der verwendete Werkstoff ist jedoch sehr spröde und mit Bezug auf die nach dem Gießen erforderliche spanende Bearbeitung der Schaufelfußgeometrie insofern nachteilig, als ein herkömmliches Spannen der Schaufel an den Bezugspunkten (K-Punkten) am Schaufelblatt nicht möglich ist, da das spröde Material infolge der bei der spanenden Bearbeitung auftretenden hohen Kräfte zerbrechen würde.

Bei einem bekannten Verfahren werden die Schaufeln aus Titanaluminid nach dem Gießen zunächst von der Speiserund Läuferstruktur, mit der sie nach dem Gießprozess noch verbunden sind, getrennt. Anschließend wird das Schaufelblatt an den für die weitere spanende Bearbeitung der Schaufelfußgeometrie notwendigen Bezugspunkten positioniert und in dieser definierten Position in ein niedrigschmelzendes Material eingegossen. An dieser Eingussmasse wird die Schaufel zur spanenden Bearbeitung des Schaufelfußes mit entsprechenden Spannmitteln schonend gehalten, so dass ein Zerbrechen der Schaufel nicht zu befürchten ist. Das Eingießen des Schaufelblattes zum Spannen der Schaufel und das nach der Bearbeitung notwendige Aufschmelzen und Entfernen der Eingussmasse ist sehr aufwendig, und zwar insbesondere unter dem Aspekt der beim Eingießen erforderlichen hohen Präzision, um das Werkstück ausgehend von den für die Fertigbearbeitung festgelegten Bezugspunkten mit höchster Genauigkeit bearbeiten zu können.

Der Erfindung liegt die Aufgabe zugrunde, den Arbeitsaufwand bei der spanenden Fertigbearbeitung von in einem Feingussverfahren hergestellten, für eine Fluggasturbine vorgesehenen Schaufeln aus Titanaluminid deutlich zu verringern.

Erfindungsgemäß wird die Aufgabe mit einem Verfahren gemäß den Merkmalen des Anspruchs 1 sowie einer Anordnung gemäß Anspruch 2 zum Aufspannen eines zu bearbeitenden Werkstücks zur Durchführung des Verfahrens gelöst.

Der wesentliche Erfindungsgedanke besteht darin, dass die im Ergebnis des Gießprozesses mit der Schaufel verbundenen Speiser und Läufer zunächst nicht entfernt werden, sondern als Hilfsspannstruktur zum Spannen der Schaufel an einem Werkstückträger benutzt und dementsprechend ausgebildet werden. Dadurch kann die Plattform der Schaufel bzw. die Schaufelfußstruktur spanend fertigbearbeitet werden, ohne dass das bruchanfällige Schaufelblatt irgendwelchen zerstörerischen Kräften unterworfen ist. Zudem ist das Aufspannen der Schaufel unter Verwendung der erfindungsgemäßen Hilfsspannstruktur und deren Ausbildung wesentlich einfacher als bei der aus dem Stand der Technik bekannten Spannstruktur, bei der das Schaufelblatt zur Bearbeitung der Schaufelfußgeometrie eingegossen und Gussstruktur an einem Werkstückträger befestigt wird.

Gemäß einem weiteren Merkmal der Erfindung wird die Schaufel mit den an dieser verbliebenen Speisern und Läufern zunächst am Schaufelblatt positioniert, und zwar mit geringster Krafteinwirkung auf das Schaufelblatt an Auflagepunkten, die den Bezugspunkten für die erforderliche spanende Bearbeitung der Schaufelgeometrie entsprechen, und danach an den Längsseiten der Plattform fixiert. In der so fixierten Position wird am Läufer eine Spannfläche mit mindestens zwei konischen Vertiefungen und an diese jeweils anschließender Bohrung mit Innengewinde erzeugt. Die so ausgebildete Hilfsspannstruktur wird an der Spannfläche eines Werkstückträgers verspannt, aus dessen Spannfläche axial gefederte und bewegliche, von Spannschrauben durchdrungene Zentrierkegelhülsen herausragen, die zur Zentrierung bzw. zum Spannen des Werkstücks am Werkstückträger in die kegelige Vertiefung bzw. die Bohrung mit Innengewinde der Hilfsspannetruktur eingreifen.

Es kann eine Vielzahl von Werkstücken mit der erfindungsgemäßen Hilfsspannstruktur an einem Werkstückträger gespannt werden, so dass letztlich mit gegenüber dem Stand der Technik verringertem Arbeitsaufwand eine industrielle Fertigbearbeitung von aus einem leichten, aber spröden Werkstoff wie Titanaluminid gegossenen Schaufeln für Gasturbinentriebwerke möglich ist.

Aus den Unteransprüchen ergeben sich zweckmäßige und Vorteilhafte Weiterbildungen der Erfindung.

Aus US-A- 5,869,194 , das den nächstliegenden Stand der Technik gegenüber dem Gegenstand der Ansprüche 1 und 2 darstellt, ist ein gattungsgemäßes Verfahren zur Fertigbearbeitung einer Schaufelfußstruktur von gegossenen Schaufeln bekannt, bei welchem das Schaufelblatt an für die weitere spanende Bearbeitung definierten Bezugspunkten mittels einer Hilfsspannstruktur aus in einem Opferbereich ausgebildeten Festlegeeinrichtungen auf einem Werkstückträger positioniert wird. Aus US 2002/174968 A1 ist es bekannt, bei einem verlorenen Modell für ein Genaugussverfahren mehrere Positionierelemente an einem Abschnitt des Modells anzubringen, der an dem fertigen Gussteil nicht mehr vorhanden ist.

Ein Ausführungsbeispiel der Anordnung zur Durchführung des erfindungsgemäßen Verfahrens zur Fertigbearbeitung des Schaufelfußes von aus einem spröden, leichten Werkstoff wie Titanaluminid gegossenen Schaufeln für ein Gasturbinentriebwerk wird anhand der Zeichnung näher erläutert. Es zeigen:
- Fig. 1: eine Draufsicht auf einen Schleudergussrohling nach dem Entformen mit einer Mehrzahl von an Speisern und Läufern angeformten Schaufeln;
- Fig. 2: eine vom Schleudergussrohling abgetrennte Schaufel (Werkstück) mit an dieser verbliebenen Speisern und Läuferabschnitten für eine Hilfsspannstruktur;
- Fig. 3: das Werkstück nach Fig. 2 mit an den beiden Abschnitten der Läufer ausgebildeten Läuferspannflächen;

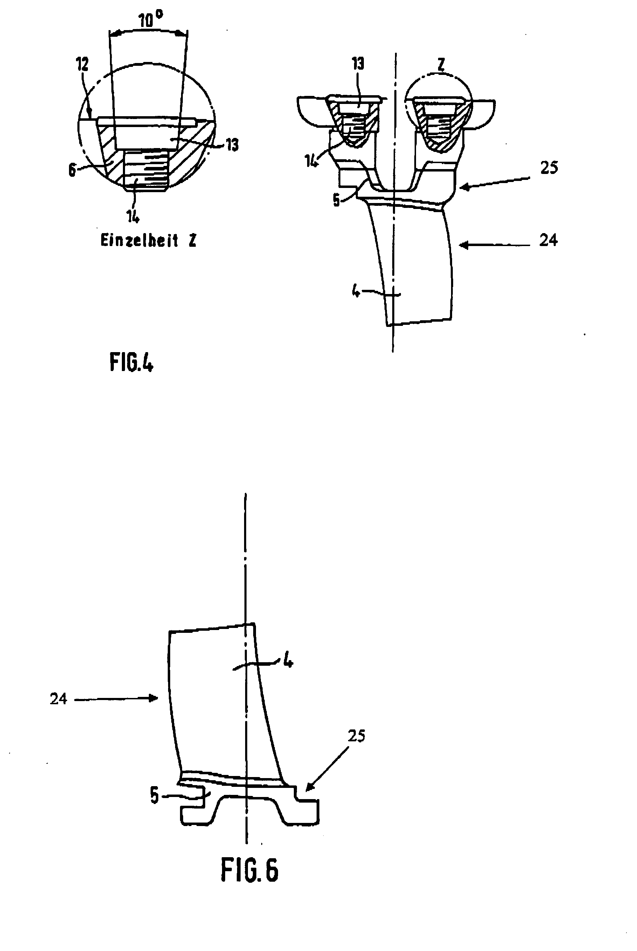

- Fig. 4: das Werkstück nach Fig. 3 mit einer von jeder Spannfläche ausgehenden konischen Vertiefung mit anschließender Bohrung mit Innengewinde;

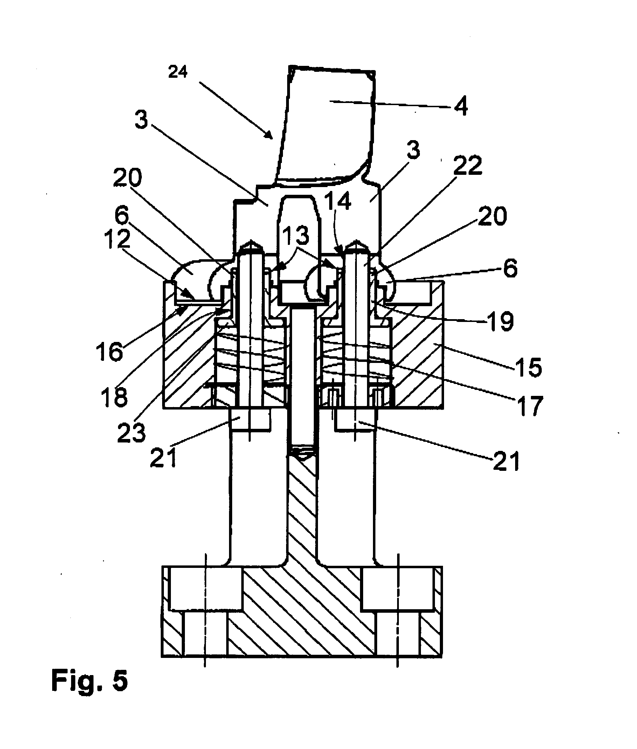

- Fig. 5: eine Teilansicht eines Werkstückträgers und des an diesem für die spanende Fertigbearbeitung der Schaufelfußgeometrie über eine Hilfsspannstruktur aufgespannten Werkstücks nach Fig. 4 und
- Fig. 6: die fertig bearbeitete Schaufel aus Titanaluminid für eine Fluggasturbine.

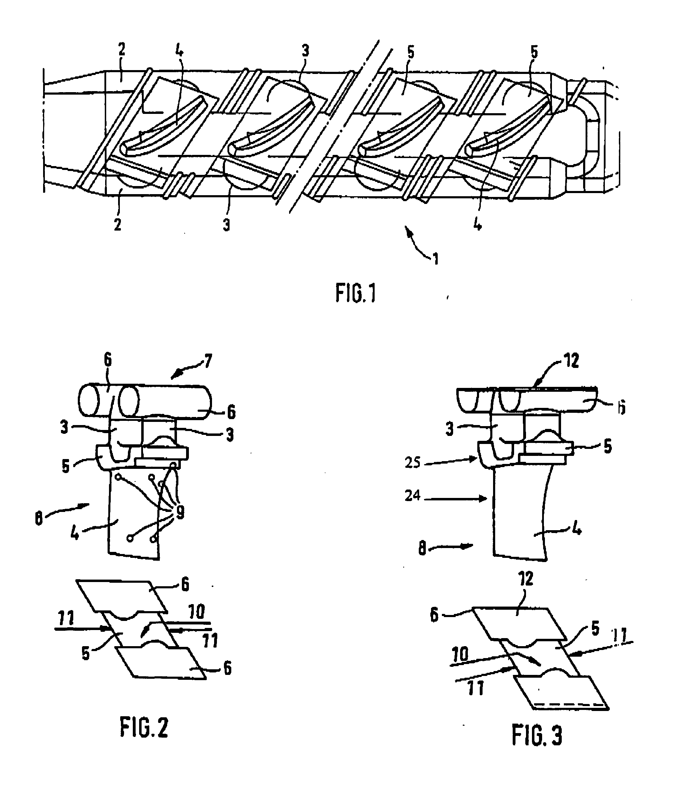

Nach dem Schleudergießen und Entformen liegt ein Schleudergussrohling 1 aus Titanaluminid (TiAl) vor, der aus zwei Läufern 2, mehreren Paaren von Speisern 3 und an jedes Paar von Speisern 3 angeformten Schaufeln 24 gebildet ist, die aus einem Schaufelblatt 4, einer Plattform 5 und einem Schaufelfuß 25 bestehen, die eine Schaufelfuß struktur 5, 25 bilden. Die Läufer 2 werden zwischen den Plattformen 5 jeweils benachbarter Schaufeln 24 durchtrennt, so dass der in Fig. 2 gezeigte Schaufelrohling als Werkstück 8 mit von zwei Abschnitten 6 von Läufern 2 ausgehenden Speisern 3, die gemeinsam eine Hilfsspannstruktur 7 bilden, an die sich die noch zu bearbeitende Plattform 5 der Schaufel 24 anschließt, zur Verfügung steht. In dem folgenden Arbeitsschritt wird das Werkstück 8 in einer genau definierten Lage an Bezugspunkten 9 im Raum positioniert.
Die Auflagepunkte entsprechen bestimmten, für die weitere spanende Bearbeitung der Schaufelfußstruktur, d. h. des Schaufelfußes25 und der Plattform 5, vorgegebenen sechs Bezugspunkten 9 am Schaufelblatt 4 (Fig. 2). In dieser Lage wird das Werkstück 8 auf einer Längsseite der Plattform 5 zunächst von unten abgestützt, wobei das Stützelement 10 beweglich bzw. wippend gelagert ist, so dass es sich vollflächig an die Plattform 5 anlegen kann (nicht dargestellt). Anschließend wird das Werkstück 8 mit einen an der gegenüberliegenden Längsseite der Plattform 5 wirksamen Klemmelement 11 fixiert. In der so fixierten Position werden die beiden Läuferabschnitte 6 an der mit Bezug auf die Plattform 5 bzw. das Schaufelblatt 4 unteren Seite spangebend bearbeitet, so dass ebene Läuferspannflächen 12 als Ausrichtflächen erzeugt werden. In diese Läuferspannflächen 12 werden - immer noch in der entsprechend den Bezugspunkten 9 fixierten Position - in dem darauf folgenden Schritt jeweils eine konische Vertiefung 13 und eine von dieser ausgehenden Bohrung 14 mit Innengewinde ausgebildet. In dieser Ausführung bilden die an dem Werkstück 8 verbliebenen Speiser 3 und Läufer 2 die Hilfsspannstruktur 7 zum Verspannen des Werkstücks 8 an einem Werkstückträger 15.

Über die Läuferspannflächen 12 mit konischer Vertiefung 13 und die Bohrung 14 mit Innengewinde wird das Werkstück 8 anschließend an einer Spannfläche 16 des Werkstückträgers 15 in der genau den Auflagepunkten, d.h. den Bezugspunkten 9 für die spanende Bearbeitung entsprechenden Position verspannt, so dass die Plattform 5 und der Schaufelfuß25 nun auf der Basis der Bezugspunkte 9 mit höchster Maßgenauigkeit fertig bearbeitet werden können. Im Werkstückträger 15 sind jeweils zwei im Abstand der konischen Vertiefungen 13 angeordnete und diesen entsprechend dimensionierte, durch je eine Schraubendruckfeder 17 elastisch abgestützte und an einem Anschlag 23 gehaltene Zentrierkegelhülsen 18 beweglich gelagert, deren zylindrischer Teil 19 in dem Werkstückträger 15 geführt ist und deren über die Spannfläche 16 des werkstückträgers 15 hinausragender konischer Teil 20 jeweils in die konische Vertiefung 13 in der Läuferspannfläche 12 eingreift und so das Werkstück 8 entsprechend seinen Bezugspunkten für die weitere spanende Bearbeitung mittels einer kegeligen Passung aus den konischen Vertiefungen 13 und der Zentrierkegelhülsen 18 genau positioniert. Durch das federnde Ineinandergreifen der beiden Konen ist nur eine geringe Toleranzeinschränkung notwendig.

Das Festspannen des Werkstücks 8 erfolgt jeweils mittels zwei in dem Werkstückträger 15 und durch die Zentrierkegelhülsen 18 geführten Spannschrauben 21, deren Gewindeabschnitt 22 in die Bohrung 14 mit Innengewinde im Werkstück 8 eingreift, um das Werkstück 8 fest an der Spannfläche 16 des Werkstückträgers15 verspannen und - ausgehend von den Bezugspunkten 9 - so lange wie möglich weiterbearbeiten zu können. Wenn alle in dieser Spannposition möglichen Bearbeitungsschritte abgeschlossen sind, werden die Hilfsspannstruktur 7, bestehend aus den beiden Speisern 3 und den entsprechend bearbeiteten Läuferabschnitten 6, vom Werkstück 8 abgetrennt und die Schaufelfußetruktur fertig gefräst. In dem Werkstückträger 15 kann eine Mehrzahl von Spannelementen, jeweils bestehend aus federnd gelagerten Zentrierkegelhülsen 18 und Spannschrauben 21, vorgesehen sein, um nacheinander möglichst viele Werkstücke 8, d.h. Schaufelrohlinge, automatisiert bearbeiten zu können.

### Bezugszeichenliste

- 1: Schleudergussrohling
- 2: Läufer
- 3: Speiser
- 4: Schaufelblatt
- 5: Plattform
- 6: Läuferabschnitt
- 7: Hilfespannstruktur
- 8: Werkstück (Schaufelrohling)
- 9: Bezugspunkt
- 10: Stützelement
- 11: Klemmelement
- 12: Läuferspannfläche
- 13: konische Vertiefung
- 14: Bohrung mit Innengewinde
- 15: Werkstückträger
- 16: Spanfläche
- 17: Schraubendruckfeder
- 18: Zentrierkegelhülsen
- 19: zylindrischer Teil
- 20: konischer Teil
- 21: Spannschrauben
- 22: Gewindeabschnitt
- 23: Anschlag
- 24: Schaufel
- 25: Schaufelfuß

## Patentansprüche

1. Verfahren zur Fertigbearbeitung einer Schaufelfußstruktur von aus einem spröden, leichten Werkstoff wie Titanaluminid gegossenen Schaufeln (24) für ein Gasturbinentriebwerk, wobei sich die Schaufelfußstruktur aus einer Plattform (5) und einem Schaufelfuß (25) zusammensetzt und die Schaufeln (24) aus einem Schaufelblatt (4) und der Schaufelfußstruktur (5, 25) bestehen, die nach dem Entformen mit einer Gussstruktur aus Speisern (3) und Läufern (2) verbunden ist, und der Schaufelrohling ein Werkstück (8) bildet und die an der Schaufelfußstruktur der Schaufel (24) verbliebenen Speiser (3) und Läuferabschnitte (6) eine Hilfsspannstruktur (7) für das Spannen des Werkstückes (8) an einem Werkstückträger (15) bilden,
**dadurch gekennzeichnet,**
**dass** zunächst das Schaufelblatt (4) an für die weitere spanende Bearbeitung definierten Bezugspunkten (9) positioniert, danach an den Längsseiten der Plattform (5) fixiert und anschließend in dieser definiertren Position an den Läuferabschnitten (6) eine Läuferspannfläche (12) mit konischen Vertiefungen (13) und von diesen ausgehender Bohrung mit Innengewinde (14) erzeugt wird, und das so vorbereitete Werkstück (8) in einer flexiblen Kegelpassung (18) an dem Werkstückträger (15) zentrisch positioniert und verspannt wird und danach an der Schaufelfußstruktur (5, 25) spannend bearbeitet wird und anschließend die Hilfsspannkonstruktion (7,3, 6, 12 bis 14) am Schaufelfuß (25) von der bearbeiteten Schaufel (24) abgetrennt und die Schaufelfußstruktur fertig bearbeitet wird.

2. Anordnung zur Durchführung des Verfahrens nach Anspruch 1 zum Positionieren, Fixieren und Spannen eines ein Wertstück (8) bildenden schaufelgüssrohlings, dessen Schaufelfußetruktur sich aus einer Plattform (5) und einem Schaufelfuß (25) zusammensetzt und dessen Schaufeln (24) aus einem Schaufelblatt (4) und der Schautelfußstruktur (5, 25) bestehen, die nach dem entformen mit einer Gussstruktur aus speisern (3) und Läufen (2) verbunden ist, wobei die an der Schaufelfußstruktur (5,25) der Schaufel (24) vobleibenen speiser (3) und Läufsabschnitte (6) eine Hilfsspannstruktur (7) für das spannen des Werkstücks (8) an einem Wearkstückträger (15) bilden, **gekennzeichnet durch**
- eine Positioniervorrichtung zum Abstützen des Schaufelblattes (4) an definierten, Bezugspunkten für die Bearbeitung der Schaufelfußstruktur entsprechenden Auflagepunkten (9); und
- eine an den Längsseiten der Plattform (5) wirkende Klemmvorrichtung (10, 11) zum Fixieren des Werkstücks (8) für die Ausbildung der Hilfsspannstruktur sowie
- mit im Wearkstückträger (15) federnd gelagerten Zentrierkegelhülsen (18), die in konische vortiefungen (13) in eine an dem Läuferabschnitten (6) erzeugt Läuferspannfläche (12) eingreifen, und
- mit **durch** die Zentrierkegelhülsen (18) geführten Spannschrauben (21), die in an die konischen Vertiefungen (13) anschließenden und von diesen ausgehenden Bohrungen mit Innengewinde (14) eingreifen.

3. Anordnung nach Anspruch 2, **dadurch gekennzeichnet, dass** die Positioniervorrichtung aus einstellbaren Einzelstützen mit jeweils kugelförmiger Auflagefläche besteht.

4. Anordnung nach Anspruch 2, **dadurch gekennzeichnet, dass** die Klemmvorrichtung ein wippenartig gelager-tes Stützelement (10) zur an die Lage angepassten Abstützung der einen Längsseite der Plattform (5) und ein an der anderen Längsseite der Plattform (5) wirkendes einstellbares Klemmelement (11) umfasst.

5. Anordnung nach Anspruch 2, **dadurch gekennzeichnet, dass** die beweglichen Zentrierkegelhülsen (18) an einer Schraubendruckfeder (17) abgestützt, an einem zylindrischen Teil (19) geführt und an einem Anschlag (23) im Werkstückträger (15) gehalten sind, wobei ein konischer Teil (20) der Zentrierkegelhülse (18) über die Spannfläche des Werkstückträgers (15) hinausragt.

6. Anordnung nach Anspruch 2, **dadurch gekennzeichnet, dass** jeweils mindestens zwei Zentrierkegelhülsen (18) und Spannschrauben (21) mit der Hilfespannstruktur (7) des Werkstücks (8) korrespondieren.

7. Anordnung nach Anspruch 2, **dadurch gekennzeichnet, dass** der Werkstückträger (15) zum Aufspannen einer Vielzahl von Werkstücken (8) mit Hilfsspannstruktur (7) ausgebildet ist.

## Claims

1. Method for the finish machining of a blade root structure of blades (24) cast in a brittle, light material, such as titanium aluminide for a gas-turbine engine, with the blade root structure including a platform (5) and a blade root (25) and the blades (24) including an airfoil (4) and the blade root structure (5, 25), which upon removal from the casting mould is connected to a casting structure of feeders (3) and runners (2), with the blade blank forming a workpiece (8) and with the feeders (3) and runner portions (6) remaining on the blade root structure of the blade (24) forming an auxiliary clamping structure (7) for clamping the workpiece (8) to a workpiece carrier (15),
**characterized in that**
the blade airfoil (4) is first positioned at reference points (9) defined for subsequent machining, is afterwards fixed at the longitudinal sides of the platform (5) and that a runner clamping surface (12) is subsequently produced in this defined position at the runner portions (6), this runner clamping surface (12) having conical recesses (13) and a threaded hole with an internal thread (14) originating at these conical recesses (13), and that the workpiece (8) so prepared is centrally positioned and clamped on the workpiece carrier (15) in a flexible taper fit (18) and is then machined on the blade root structure (5, 25), and that finally the auxiliary clamping structure (7, 3, 6, 12 to 14) is severed on the blade root (25) from the machined blade (24) and the blade root structure is finish-machined.

2. Arrangement for the performance of the method in accordance with Claim 1 for the positioning, fixation and clamping of a blade casting blank forming a workpiece (8), the blade root structure of which includes a platform (5) and a blade root (25) and the blades (24) of which include an airfoil (4) and the blade root structure (5, 25), which upon removal from the casting mould is connected to a casting structure of feeders (3) and runners (2), with the feeders (3) and runner portions (6) remaining on the blade root structure (5, 25) of the blade (24) forming an auxiliary clamping structure (7) for clamping the workpiece (8) to a workpiece carrier (15), **characterized by**
- a locating device for supporting the blade airfoil (4) at defined supporting points (9) corresponding to reference points for the machining of the blade root structure, and
- a clamping device (10, 11 ) acting on the longitudinal sides of the platform (5) for fixation of the workpiece (8) for the generation of the auxiliary clamping structure (7), and
- spring-loaded taper centering sleeves (18) arranged in the workpiece carrier (15), which engage the conical recesses (13) in a runner clamping face (12) produced on the runner portions (6), and
- clamping bolts (21) passing through the taper centering sleeves (18), which engage internally threaded (14) holes adjoining and originating at the conical recesses (13).

3. Arrangement in accordance with Claim 2, **characterized in that** the locating device includes adjustable individual supports, each provided with a spherical locating face.

4. Arrangement in accordance with Claim 2, **characterized in that** the clamping device includes a rockered supporting element (10) for positionally conform support of one longitudinal side of the platform (5) and an adjustable clamping element (11) acting on the other longitudinal side of the platform (5).

5. Arrangement in accordance with Claim 2, **characterized in that** the moveable taper centering sleeves (18) rest on a helical compression spring (17), are guided by a cylindrical portion (19) and held at a stop (23) in the workpiece carrier (15), with a conical portion (20) of the taper centering sleeve (18) protruding beyond the clamping surface of the workpiece carrier (15).

6. Arrangement in accordance with Claim 2, **characterized in that** at least two taper centering sleeves (18) and clamping bolts (21) each correspond with the auxiliary clamping structure (7) of the workpiece (8).

7. Arrangement in accordance with Claim 2, **characterized in that** the workpiece carrier (15) is provided with an auxiliary clamping structure (7) for clamping a plurality of workpieces (8).

## Revendications

1. Procédé pour le finissage d'une structure de pied d'aubes (24) pour un moteur à turbine à gaz, moulées dans un matériau léger et fragile tel qu'aluminiure de titane, sachant que la structure de pied d'aube se compose d'une plateforme (5) et d'un pied d'aube (25), et que les aubes (24) sont constituées d'une pale (4) et de la structure de pied d'aube (5, 25) qui, après le démoulage, est reliée à une structure moulée constituée d'alimenteurs (3) et de canaux de coulée (2), et que l'ébauche d'aube forme une pièce d'oeuvre (8) et que les alimenteurs (3) et les sections de canaux de coulée (6) restés sur la structure de pied de l'aube (24) forment une structure de serrage auxiliaire (7) pour serrer la pièce d'oeuvre (8) à un porte-pièce (15),
**caractérisé en ce que**
la pale (4) est tout d'abord positionnée sur les points de référence (9) définis pour la suite de l'usinage par enlèvement de copeaux, puis fixée sur les grands côtés de la plateforme (5), et qu'ensuite, dans cette position définie sur les sections de canaux de coulée (6), est façonnée une surface de serrage des canaux de coulée (12) avec des évidements coniques (13) desquels part un perçage avec taraudage (14), et que la pièce d'oeuvre (8) ainsi préparée est centrée et serrée dans un élément d'ajustement conique flexible (18) sur le porte-pièce (15), puis est usinée par enlèvement de copeaux sur la structure de pied d'aube (5, 25), et qu'ensuite la construction de serrage auxiliaire (7, 3, 6, 12 à 14) sur le pied d'aube (25) est séparée de l'aube usinée (24) et la structure de pied d'aube est finie par usinage.

2. Arrangement pour réaliser le procédé selon la revendication n° 1, destiné à positionner, fixer et serrer une ébauche d'aube moulée formant une pièce d'oeuvre (8), dont la structure de pied d'aube est composée d'une plateforme (5) et d'un pied d'aube (25), et dont les aubes (24) sont constituées d'une pale (4) et de la structure de pied d'aube (5, 25) qui, après le démoulage, est reliée à une structure moulée constituée d'alimenteurs (3) et de canaux de coulée (2), sachant que les alimenteurs (3) et les sections de canaux de coulée (6) restés sur la structure de pied d'aube (5, 25) de l'aube (24) forment une structure de serrage auxiliaire (7) pour serrer la pièce d'oeuvre (8) à un porte-pièce (15),
**caractérisé par**
- un dispositif de positionnement pour maintenir la pale (4) sur des points de référence définis pour l'usinage de la structure de pied d'aube correspondant aux points d'appui (9) ; et
- un dispositif de serrage (10, 11) agissant sur les grands côtés de la plateforme (5) et destiné à fixer la pièce d'oeuvre (8) pour former la structure de serrage auxiliaire (7), ainsi que par
- des douilles de centrage coniques (18) logées sur ressorts dans le porte-pièce (15) et qui s'engagent dans des évidements coniques (13) d'une surface de serrage des canaux de coulée (12) façonnée sur les sections de canaux de coulée (6), et par
- des vis de serrage (21) guidées à travers les douilles de centrage coniques (18), qui s'engagent dans des perçages avec taraudages (14) qui sont contigus aux évidements coniques (13) et partent de ceux-ci.

3. Arrangement selon la revendication n° 2, **caractérisé en ce que** le dispositif de positionnement est constitué de différents supports réglables ayant chacun une surface d'appui sphérique.

4. Arrangement selon la revendication n° 2, **caractérisé en ce que** le dispositif de serrage comprend un élément de maintien (10) logé de manière basculante pour un maintien en position conforme d'un grand côté de la plateforme (5), et un élément de serrage réglable (11) agissant sur l'autre grand côté de la plateforme (5).

5. Arrangement selon la revendication n° 2, **caractérisé en ce que** les douilles de centrage coniques mobiles (18) s'appuient sur un ressort hélicoïdal de compression (17), sont guidées sur une pièce cylindrique (19) et sont maintenues sur une butée (23) dans le porte-pièce (15), sachant qu'une pièce conique (20) de la douille de centrage conique (18) fait saillie sur la surface de serrage du porte-pièce (15).

6. Arrangement selon la revendication n° 2, **caractérisé en ce que** respectivement au moins deux douilles de centrage coniques (18) et vis de serrage (21) sont en correspondance avec la structure de serrage auxiliaire (7) de la pièce d'oeuvre (8).

7. Arrangement selon la revendication n° 2, **caractérisé en ce que** le porte-pièce (15) est conçu pour serrer une pluralité de pièces d'oeuvre (8) avec la structure de serrage auxiliaire (7).
